(19) Europäisches Patentamt / European Patent Office / Office européen des brevets

(11) **EP 3 637 803 B1**

(12) **EUROPEAN PATENT SPECIFICATION**

(45) Date of publication and mention
of the grant of the patent:
**04.08.2021 Bulletin 2021/31**

(21) Application number: **19202050.1**

(22) Date of filing: **08.10.2019**

(51) Int Cl.:
*H04W 4/02* (2018.01)          *H04W 24/08* (2009.01)

(54) **METHOD TO IDENTIFY MALFUNCTIONS IN THE MANAGEMENT OF CALLS IN A TELEPHONE CELL**

VERFAHREN ZUR IDENTIFIZIERUNG VON STÖRUNGEN BEI DER VERWALTUNG VON ANRUFEN IN EINER TELEFONZELLE

PROCÉDÉ POUR IDENTIFIER DES DYSFONCTIONS DANS LA GESTION DES APPELS DANS UNE CELLULE TÉLÉPHONIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.10.2018 IT 201800009251**

(43) Date of publication of application:
**15.04.2020 Bulletin 2020/16**

(73) Proprietors:
• **Vodafone Italia S.p.A.**
**10015 Ivrea (TO) (IT)**
• **Vodafone IP Licensing Limited**
**Newbury, Berkshire RG14 2FN (GB)**

(72) Inventors:
• **Zaramella, Andrea**
**10015 Ivrea TO (IT)**
• **Brunelli, Federica**
**10015 Ivrea TO (IT)**
• **Radicella, Vincenzo**
**10015 Ivrea TO (IT)**

(74) Representative: **Perani & Partners S.p.A.**
**Piazza Armando Diaz, 7**
**20123 Milano (IT)**

(56) References cited:
EP-A1- 2 785 098     US-A1- 2017 318 555
US-B2- 10 039 013

**Description**

*Technical Field*

The present invention relates to a method for identifying malfunctions in the management of calls in a telephone cell.

In particular, the method of the present invention implements a series of steps which allow optimising and improving network coverage.

*State of the Art*

In the prior art a plurality of telephone cells is arranged in a territory in order to provide a user with network coverage for making calls and/or connecting to the internet. In particular, each telephone cell, comprising an antenna for transmitting and receiving a signal, provides a network coverage area according to the position in the territory (urban/suburban). The user moving in the same territory during a call and/or internet connection establishes a signal connection with a telephone cell when it enters the network coverage area of the cell itself. Occasionally, it happens that during a call a *drop call* occurs on a telephone cell, for example when the moving user establishes a sequence of signal connections quickly passing from one telephone cell to the next. In this regard, it is known to act on specific parameters of the telephone cells in which a certain number of drop calls have occurred, for example by modifying the angle of the antenna or the handover, in order to optimise the network coverage. Documents US 2017318555 A1 and US 10039013 B2 describe known methods of optimising the operation of telephone cells.

*Problem of the Prior Art*

The process of optimising the operation of a telephone cell in which various call drops have occurred requires a long and complicated process. In fact, the modification of the parameters of the telephone cell takes place through a process that proceeds by modifying and controlling the response of the cell by attempts. For example, the known method envisages modifying the parameters of the telephone cell in an iterative manner until the telephone cell itself is optimised, requiring a great deal of time.

*Object of the Invention*

The object of the present invention is to provide a method for identifying malfunctions in the management of calls in a telephone cell that is able to overcome the aforementioned drawbacks of the known art.

In particular, an object of the present invention is to provide a method capable of classifying the type of malfunction of the cell so as to facilitate the choice of the parameter to be modified to optimise the operation of the cell itself and of the telephone network.

The defined technical task and the specified aims are substantially achieved by a method for identifying the malfunctions in the management of calls in a telephone cell comprising the technical characteristics set forth in one or more of the appended claims.

*Advantages of the Invention*

Advantageously, the proposed method allows associating spatial information with drop calls so as to identify and classify the type of malfunction in the management of the calls.

Advantageously, the proposed method allows acting on a telephone cell by modifying the parameters of the telephone cell in a targeted manner.

Advantageously, the identification of the network problems of a given cell allows acting directly on the cell in order to optimise the network.

BRIEF DESCRIPTION OF THE DRAWINGS

Further characteristics and advantages of the present invention will become more apparent from the approximate and thus non-limiting description of a preferred, but not exclusive, embodiment of a method for identifying malfunctions in the management of calls in a telephone cell, as illustrated in the accompanying drawings, in which:

- figure 1 shows a flow diagram of the steps of the method of the present invention;

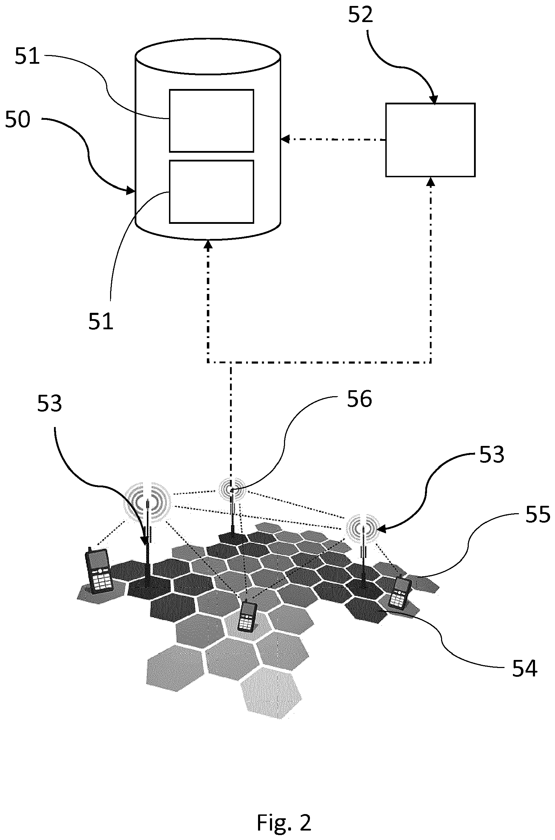

- figure 2 shows a hardware system used to implement the method of figure 1.

DETAILED DESCRIPTION

Even when not explicitly highlighted, the individual characteristics described with reference to the specific embodiments must be considered as accessories and/or exchangeable with other characteristics, described with reference to other embodiments.

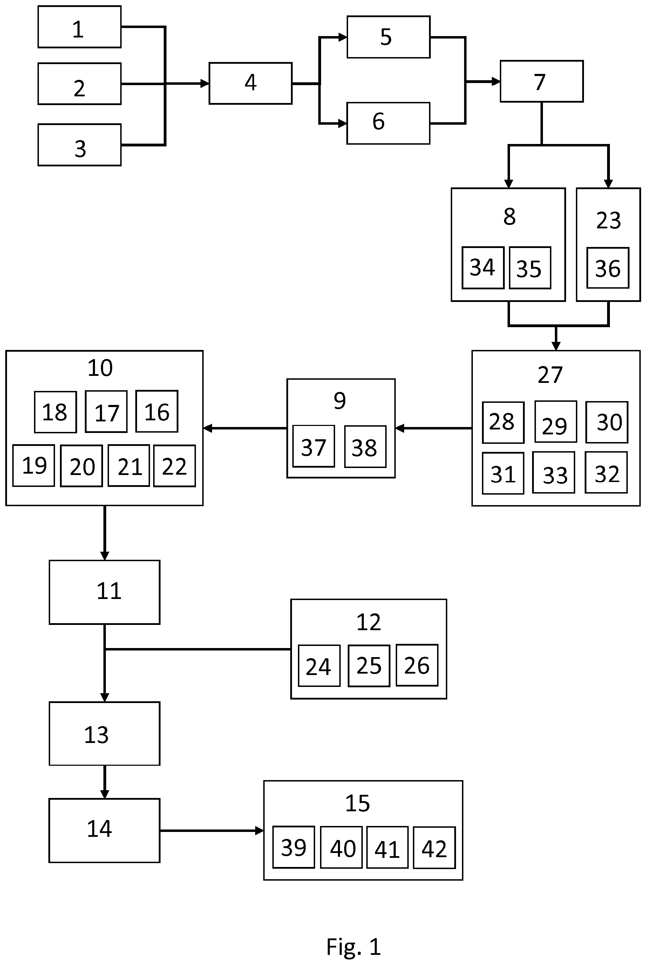

The present invention relates to a method for identifying malfunctions in the management of calls in a telephone cell. The method comprises the steps described below, carried out according to a preferred embodiment in the order shown in figure 1.

The method comprises the step 1 of providing at least one memory unit 50 configured for receiving and storing data. In particular, the memory unit 50 is equipped with a plurality of memory areas 51 in which the data received from the memory unit 50 are stored.

The method comprises the step of providing 2 at least one processing unit 52 in signal communication with the memory unit 50 and configured to process and store data in the memory unit 50 taken from one or more memory areas 51.

The method comprises the step of providing 3 a plurality of telephone cells 53 in signal communication with the processing unit 52 and with the memory unit 50.

In accordance with a preferred embodiment of the invention, each telephone cell 53 provides a network coverage area 54 allowing a user to establish a signal connection with the telephone cell 53. Preferably the user is equipped with a mobile device 55 configured to establish the signal connection with the telephone cell 53. This signal connection is established when the user enters the network coverage area 54 of the telephone cell 53 and is preferably interrupted when the user leaves the network coverage area 54 of the telephone cell 53. In further detail, the mobile device 55 of a moving user establishes a signal connection with a telephone cell 53 whenever it enters the network coverage area 54 of the telephone cell 53. Occasionally, the signal connection between the mobile device 55 and the telephone cell 54 is interrupted due to a malfunction of the telephone cell 53 itself.

It should be noted that the user is able to make, for example, calls and connect to the internet via the mobile device 55 when the signal connection is established with a telephone cell 53.

The network coverage area 54 preferably varies from two hundred metres (urban area) to one or more kilometres (suburban area). More preferably, telephone cells 53 are geographically located in a territory in order to guarantee network coverage throughout the territory.

The network coverage area 54 of a telephone cell 53 changes according to the territory due to refraction phenomena.

Preferably each telephone cell 53 is configured to detect at least call endings that have taken place in the telephone cell 53 and signal connections between a user and the telephone cell itself 53. In other words, each telephone cell 53 is configured to detect when the mobile device 55 of the user establishes a signal connection with the cell 53 itself and makes calls and/or connections to the internet.

Furthermore, each telephone cell 53 is preferably configured to acquire a first set of data relating to each detected call ending and to acquire a second set of data relating to each detected signal connection.

In particular, the first set of data acquired relating to the call ending is associated with each detected call ending.

Each first set of data comprises at least:

- an identifier code of the user of the call ending, i.e. an identifier of the user whose mobile device 55 was connected to the telephone cell 53 at the time of the call ending;
- a time instant of the call ending, i.e. a time instant in which the signal connection between the user's mobile device 55 and the telephone cell 53 is interrupted;
- geographic coordinates of the telephone cell 53 in which the call ending is detected, i.e. a geographic position of the telephone cell 53 in which the interruption of signal connection between the user's mobile device 55 and the telephone cell 53 takes place.

Preferably, the identifier code is assigned by the telephone company to the user who signed a contract with the company itself.

The second set of data acquired is associated with each detected signal connection between a user and the telephone cell 53.

Preferably, each signal connection between the user and the telephone cell 53 is a packet connection in which the user's mobile device 55 sends at least the second set of data to the telephone cell 53 with which it is in signal connection.

In further detail, the mobile device 55 of a user moving in the territory makes the signal connection with a telephone cell 53 whenever it enters the network coverage area 54 of the telephone cell 53, sending the second set of data to the telephone cell 53.

According to the preferred embodiment of the present invention, each packet connection between a user and the telephone cell 53 is of the "packet switch" type. In other words, whenever a mobile device 55 sends at least the second set of data to the telephone cell, a PS event ("packet switch" event) known to the person skilled in the art and not further detailed here occurs.

Each second set of data comprises at least:

- an identifier code of the user of the signal connection, i.e. an identifier of the user whose mobile device 55 was in signal connection with the telephone cell 53;
- the time instant of the signal connection, i.e. a time instant in which a user's mobile device sends the second set of data to the telephone cell 53;
- the geographic coordinates of the cell 53 in which the signal connection is detected, i.e. the geographic position on the territory of the cell 53 to which the mobile device 55 has sent the second set of data in the time instant of the signal connection.

Preferably, according to a preferred embodiment, each telephone cell 53 provided preferably comprises at least one data acquisition unit 56 in signal communication with the memory unit 50 and the processing unit 52 and configured to detect at least the signal connections.

Preferably the data acquisition unit 56 is configured to detect the call endings. Furthermore, the data acquisition unit 56 is preferably also configured to acquire the first set of data and the second set of data.

According to the preferred embodiment of the present invention, the data acquisition unit 56 is configured to detect the call endings and signal connections and to acquire the first and second sets of data.

In further detail, the acquisition unit preferably comprises:

- a first part, not shown, configured to detect the call endings and receive the first set of data. In particular, according to the preferred embodiment of the present invention, the first part is embodied with a *call detail record* (CDR);
- a second part, not shown, configured to detect the signal connection and receive the second set of data. In particular, according to the preferred embodiment of the present invention, the second part is embodied with a PS probe (packet switch) known to the person skilled in the art and not further detailed.

The method comprises the step of detecting 4 the call endings that took place in a telephone cell 53 and signal connections between the user and said telephone cell 53. Preferably, the step of detecting 4 the call endings is performed by the telephone cell 53.

The method comprises the step of acquiring the first set of data 5 relating to each call ending detected by each telephone cell 53. Preferably, the step of acquiring the first set of data 5 is performed by the telephone cell 53. Even more preferably, the step of acquiring the first set of data 5 is performed by the data acquisition unit 56.

The method comprises the step of acquiring the second set of data 6 relating to each signal connection detected by each telephone cell 53. Preferably, the step of acquiring the second set of data 6 is performed by the telephone cell 53. Even more preferably, the step of acquiring the second set of data 6 is performed by the data acquisition unit 56.

In other words, each telephone cell 53 according to the preferred embodiment performs the steps of detecting 4 call endings, acquiring the first 5 and the second sets of data 6 if the user in signal connection with the telephone cell 53 intentionally or unintentionally interrupts a call.

The method comprises the step of storing 7 in the memory unit 50 every call ending, every signal connection detected, every first set of data acquired and every second set of data acquired. Preferably, each first set of data acquired is associated with the relative call ending and every second set of data acquired is associated with the relative signal connection detected.

The method comprises the step of identifying 8 by means of said processing unit which ones among said call endings detected by each telephone cell 53 are dropped calls.

The step of identifying 8 by means of the processing unit 52 which ones among the call endings detected by each telephone cell 53 are dropped calls comprises the sub-step of:

- replacing the identifier code of the user of the call ending, the time instant of the call ending and the geographic coordinates of the cell in which the call ending is detected with the identifier code of the user of the dropped call, the time instant of the dropped call and the geographic coordinates of the cell 53 in which the dropped call is detected.

According to a preferred embodiment, the first set of data also comprises a call duration time.

In further detail, the step of identifying 8 by means of the processing unit 52 which ones among the call endings detected by each telephone cell 53 are dropped calls comprises the sub-step of considering 34 only the call endings associated with a value of said duration time of the call that is lower than a threshold value of maximum duration time of the call. Preferably, the threshold value of maximum duration time of the call is ninety seconds.

Advantageously, the sub-step of comprising the calls with a lower duration than the threshold value of maximum duration time of the call allows normalising the detection of the user's position.

The method comprises the step of identifying 23, preferably by means of the processing unit, which ones among the call endings detected in each telephone cell 53 are successful call endings.

The step of identifying 23 by means of the processing unit 52 which ones among the call endings detected by each telephone cell 53 are successful call endings comprises the sub-step of:

- replacing 36 the identifier code of the user of the call ending, the time instant of the call ending and the geographic coordinates of the cell in which the call ending is detected with the identifier code of the user of the successful call ending, the time instant of the successful call ending and the geographic coordinates of the cell 53 in which the successful call ending is detected.

Preferably, the identification of the dropped calls and the successful call endings is conducted by means of analysing the cause of the call release.

Preferably, the steps of identifying the dropped calls and successful call endings are carried out simultaneously.

In further detail, according to the preferred embodiment the *call detail record* is configured to associate to each identified call ending an identifier code of dropped call or of successful call ending.

The method comprises the step of associating 9 by means of the processing unit 52 to each identified dropped call the second set of data for each signal connection between the identifier code of the user associated with the identified dropped call and a telephone cell 53 that took place in a first time interval which extends between a first time instant preceding the time instant of the dropped call and a second time instant subsequent to the time instant of the dropped call.

In other words every dropped call is associated with the user's spatial information relating to the signal connections that took place with the telephone cells in the first time interval.

Advantageously, the step of associating 9 the second set of data of each signal connection between the user of the dropped call and the telephone cells 53 provides the user's spatial information relating to the user's movement in the same territory.

Advantageously, the spatial information associated with each identified dropped call makes it possible to reconstruct the user's movement pattern before and after the dropped call.

Preferably, the step of associating 9 preferably comprises the sub-steps of:

- selecting 37 the identifier code of a user of a dropped call detected in a telephone cell 53;
- recovering 38 from the memory unit 50 every second set of data that the mobile device of the identifier code of the user of the dropped call has sent to the telephone cells 53 in the first time interval.

Preferably, the first time instant and the second time instant have a duration of at least five minutes. Even more preferably, the second time instant has at least a duration of one minute.

The method comprises the step of building 10 by means of said processing unit 52 for each identified dropped call in each telephone cell 53 at least one index relating to geographic coordinates of the telephone cell 53 associated with the dropped call and of the at least another telephone cell 53.

Preferably, the index comprises a first index that depends on the telephone cell 53 associated with an identified dropped call and the telephone cell 53 associated with a last signal connection before the dropped call. In particular, the first index relates to a spatial distance between a telephone cell 53 associated with a dropped call and another telephone cell 53 detecting a last signal connection between the user associated with the dropped call and the same telephone cell 53.

In further detail, the step of building 10 at least one index relating to the geographic coordinates between the telephone cell 53 associated with the identified dropped call and at least another telephone cell 53 comprises the sub-steps of:

- measuring 16 a spatial distance between the coordinates of the telephone cell 53 detecting the dropped call and the geographic coordinates of the at least another telephone cell 53 associated with the last signal connection between the identifier code of the user associated with the dropped call and the telephone cell itself;
- associating 17 the spatial distance with the first index D;
- storing 18 the first index in said memory unit 50.

In other words, the first index identifies the distance between the cell 53 to which the user is in signal connection at the time of the dropped call and the cell 53 with which the last signal connection took place before the dropped call, excluding the cell 53 associated with the dropped call. Preferably, the first index allows associating the telephone cell 53 with a malfunction relating to the actual distance between the cell 53 associated with the dropped call and the cell 53 associated with the last signal connection.

Advantageously, the method quantifying the distance between the cell associated with the dropped call and the cell associated with the last signal connection before the dropped call allows recognising the telephone cells 53 with malfunctions due to connections at high distances.

Advantageously, the method quantifying the distance between the cell associated with the dropped call and the cell associated with the last signal connection before the drop allows identifying telephone cells 53 whose network coverage area is distorted for example due to refraction effects of the signal.

Preferably, the index comprises a second index which depends on the geographic coordinates of the telephone cells 53 associated with the signal connections relating to the identifier code of the user of the dropped call in the first time interval.

The step of building 10 at least one index relating to the geographic coordinates between the telephone cell 53 associated with the dropped call and at least another telephone cell comprises the sub-steps of:

- measuring 19 a barycentre of the geographic coordinates of the telephone cells 53 associated with the signal connections relating to the identifier code of the user of the dropped call in the first time interval;
- measuring 20 a spatial dimension as the distance between the barycentre and the geographic coordinates of the telephone cells associated with the signal connections relating to the identifier code of the user of the dropped call in the first time interval, wherein the spatial dimension is a radius of a circumference centred in the barycentre;

- associating 21 the spatial dimension to the second index;
- storing 22 the second index in the memory unit 50.

In other words, the second index is a radius of a circle centred in said barycentre. In particular, the second index allows identifying a circular area in which the user has moved in the time interval. In particular, the second index identifies the mobility of the user in the territory in the first time interval. For example, if the user is moving on the highway, in conditions of little traffic, he will have high mobility in that a high number of signal connections will be detected with the cells placed on the territory along the highway in a certain time interval, while if the moving user moves on foot, he will have low mobility in that a low number of signal connections will be detected with the telephone cells in the time interval.

According to the preferred embodiment of the present invention, the telephone cell associated with the dropped call is excluded from the sub-steps of measuring the barycentre and measuring the second index.

In further detail, the second index is obtained from the following expression:

$$M = \sqrt{\frac{1}{n} \sum_{i=1}^{n} (r_i - r_{ba})^2}$$

Where:

- n is the number of signal connections in the first time interval associated with the identifier code of the user of the dropped call;
- r ba: is the barycentre calculated from the coordinates of the telephone cells 53 associated with the signal connections in the first time interval associated with the identifier code of the user of the dropped call;
- ri: geographic coordinates of the single signal connection in the first time interval associated with the identifier code of the user of the dropped call.

Advantageously, the method quantifying the second index identifies the user's movement in the first time interval.

According to the present invention, the step of building the indices builds the first and the second indexes.

The method comprises the step of calculating 11 for each telephone cell 53 by means of the processing unit 52 an effective mean of the built indexes.

According to the preferred embodiment of the present invention, the effective mean comprises a first effective mean (Ddrop) relating to the first index and a second effective mean (Mdrop) relating to the second index. In other words, for each cell the method envisages calculating the first and second effective means respectively of all the first and second indices built for the cell itself. In detail, the method allows, by calculating the first effective mean and the second effective mean, associating the statistical behaviour of the user before and after the dropped call to a malfunction of the telephone cell 53 determining the dropped call.

The method comprises the step of providing 12 to the processing unit 52 for each telephone cell 53 at least a sample mean relating to the geographic coordinates between the telephone cell 53 associated with a dropped call and at least another telephone cell 53.

Preferably the step of providing at least one sample mean comprises the sub-steps of:

- associating 24 by means of the processing unit 52 to each identified successful call ending the second set of data for each signal connection between the identifier code of the user of the successful call ending and the telephone cell 53 that took place in a second time interval which extends between a first time instant preceding the time instant of the successful call ending and a second time instant subsequent to the instant of the successful call ending;
- building 25 for each telephone cell 53 by means of the processing unit 52 for each successful call ending identified in the telephone cell at least one sample index relating to the geographic coordinates of the telephone cell associated with the successful call ending and of the at least another telephone cell;
- calculating 26 for each telephone cell 53 by means of the processing unit 52 a sample mean of the built sample indexes.

In other words, for each successful call ending the method envisages associating the user's spatial and/or geographic information before the user himself voluntarily ends the call.

Preferably, the sample index comprises a first sample index which depends on the telephone cell associated with the successful call ending and the telephone cell 53 associated with the last signal connection prior to the successful call ending.

Preferably, the sample index comprises a second sample index which depends on the geographic coordinates of the telephone cells associated with the signal connections relating to the identifier code of the user of the successful call ending in the second time interval.

According to the preferred embodiment of the present invention, the step of providing a sample index provides the first and the second sample index and the respective first sample mean (Dctr) and the second sample mean (Mctr).

The method comprises the step of processing 13 by means of the processing unit 52 the effective mean and the sample mean to calculate a significant parameter for each telephone cell. In particular, the significant parameter preferably has values comprised between [-1; +1].

According to the preferred embodiment of the present invention, the significant parameter comprises:

- a first significant parameter (KPI Distance) relating to the first index and to the first sample index, i.e. a parameter representative of the call endings linked to the statistical distance between the telephone cell 53 associated with the dropped call and to the telephone cell associated with the last signal connection before the dropped call;
- a second significant parameter (KPI Mobility) relating to the second index and the second sample index, i.e. a parameter representative of the call endings linked to the statistical mobility of the user before and after the dropped call.

More preferably, the first significant parameter and the second significant parameter are obtained from the following expressions:

$$\text{KPI Distance} = (Ddrop - Dctr)/(Ddrop + Dctr)$$

$$\text{KPI Mobility} = (Mdrop - Mctr)/(Mdrop + Mctr);$$

Where:

- Ddrop is the first effective mean;
- Dctr is the first sample mean;
- Mdrop is the second effective mean;
- Mctr is the second sample mean.

The method comprises the step of comparing 14 by means of the processing unit 52 the significant parameter with a pre-set threshold value. Preferably, the pre-set threshold value is 0.3.

In other words, the method allows calculating significant parameters characteristic of the telephone cell 52 which can be associated with the type of malfunction.

The method comprises the step of signalling a malfunction 15 of the telephone cell 53 if the significant parameter is greater than the pre-set threshold value.

The step of signalling a malfunction 15 comprises the sub-steps of:

- classifying the telephone cell 53 with dropped call by distance 39 if the first significant parameter (KPI Distance) is greater than the pre-set threshold value, i.e. the malfunction that caused the dropped call in the telephone cell may be due to the fact that the telephone cell 53 has a network coverage area 54 which is larger than expected, causing a signal connection with the user which is unstable at a high distance;
- classifying the telephone cell 53 with dropped call by mobility 40 if the second significant parameter (KPI Mobility) is greater than the pre-set threshold value, i.e. the malfunction that caused the dropped call in the telephone cell may be due to difficulties of the cell to establish a signal connection with the mobile device 55 of the user;
- classifying the telephone cell 53 with dropped call by distance and mobility 41 if the values of the first significant parameter (KPI Distance) and of the second significant parameter (KPI Mobility) are greater than the pre-set threshold value, i.e. the malfunction may be due to difficulties of the cell to establish a signal connection with the mobile device 55 of the user at a greater distance;
- classifying the telephone cell 53 with dropped call that cannot be connected to distance and mobility 42 if the values of the first significant parameter (KPI Distance) and of the second significant parameter (KPI Mobility) are lower than the pre-set threshold value, i.e. the malfunction is not significant enough for the telephone cell 53 to require maintenance.

In other words, the method provides for extrapolating statistical spatial information of users subjected to a dropped call in a telephone cell and for processing such information to signal the causes of the malfunctioning of the telephone cell 53. In further detail, the significant parameters allow associating the causes of the malfunctions of the telephone cells to the telephone cells 53 which have caused the dropped calls.

Advantageously, the method allows identifying the network problems relating to a telephone cell by analysing the actual movement of the customers using the mobile network.

Advantageously, by classifying the type of malfunction, the proposed method is able to detect which telephone cells 53 have network coverage 54 distorted by refraction phenomena.

Advantageously, by allowing the classification of the dropped calls, the method facilitates intervention operations on the telephone cells 53. In particular, these intervention operations substantially comprise modifications of the *handover* parameters or corrections of the refraction phenomena by resetting the parameter relating to the network coverage area 54 (cell angle).

Advantageously, by allowing the classification of dropped calls, the method reduces the time required and optimises the intervention operations on the telephone cells.

Advantageously, by allowing the classification of dropped calls, the method guarantees targeted interventions on each telephone cell.

The method comprises the step of selecting the telephone cell for identifying the malfunction 27.

Advantageously, the step of selecting the telephone cell for identifying the malfunction 27 allows having sufficient statistics for building reliable significant parameters.

Preferably, the step of selecting 27 a telephone cell is performed downstream of the identification of dropped calls and successful call endings.

The step of selecting the telephone cell for identifying the malfunction 27 comprises the sub-steps of:

- counting 28 the dropped calls for each telephone cell 53, preferably identified in a time span of one week, even more preferably in a time span of one month;
- comparing 29 the dropped calls counted for each telephone cell 53 with a minimum number of dropped calls;
- selecting 30 the telephone cell if the number of dropped calls is greater than the minimum number of dropped calls. Preferably, the minimum number of dropped calls is at least one hundred.

Preferably, the step of selecting the telephone cell for identifying the malfunction 27 comprises the sub-steps of:

- counting 31 the successful call endings for each telephone cell 53, preferably identified in a time span of one week, even more preferably in a time span of one month;
- comparing 32 the successful call endings counted for each telephone cell with a minimum number of successful call endings;
- selecting 33 the telephone cell if the number of successful call endings is greater than the minimum number of successful call endings. Preferably, the minimum number of successful call endings is at least one thousand.

Advantageously, the step of selecting the telephone cell 43 for identifying the malfunction allows having sufficient statistics for building reliable significant parameters.

Obviously, a person skilled in the art, for the purpose of satisfying contingent and specific requirements, can make numerous modifications to the variants described above, all therefore contained within the scope of protection as defined in the following claims.

**Claims**

1. Method for identifying malfunctions in the management of calls in a telephone cell comprising the steps of:

   - providing (1) at least one memory unit (50) configured for receiving and recording data;
   - providing (2) at least one processing unit (52) in signal communication with the memory unit (50) and configured to process and record data in the memory unit (50);
   - providing (3) a plurality of telephone cells (53) in signal communication with the data processing unit (52) and with the memory unit (50),
   - detecting (4) by means of each telephone cell (53) call endings that took place in said telephone cell (53) and signal connections between a user and said telephone cell (53);
   - acquiring a first set of data (5) relating to each call ending detected by each telephone cell (53), said first set of data comprising at least one identifier code of said user of said call ending and a time instant of said call ending and geographic coordinates of said cell (53) in which said call ending is detected;
   - acquiring a second set of data (6) relating to each signal connection detected by each telephone cell (53);
   - storing (7) in said memory unit (50) every call ending detected and every signal connection detected and each first set of data acquired and each second set of data acquired;
   - identifying (8) by means of said processing unit (52) which ones among said call endings detected by each telephone cell (53) are dropped calls;
   - associating (9) by means of said processing unit (52) to each identified dropped call said second set of data for each signal connection between said identifier code of said user associated with the identified dropped call and said telephone cell (53) that took place in a first time interval between a first instant of time prior to said time instant of said dropped call and a second instant of time subsequent to said time instant of said dropped call;
   - building (10) by means of said processing unit (52) for each dropped call identified in each telephone cell (53) at least one index relating to geographic coordinates of said telephone cell associated with said dropped call and of the at least another telephone cell (53) associated with said last signal connection before said dropped call;
   - calculating (11) for each telephone cell (53) by means of said processing unit (52) an effective mean of said built indexes;
   - providing (12) to said processing unit (52) for each telephone cell (53) at least one sample mean relating to said geographic coordinates between said telephone cell associated with a dropped call and at least another telephone cell (53) associated with said last signal connection before said dropped call;
   - processing (13) by means of the processing unit (52) said effective mean and said sample mean to calculate a significant parameter for each telephone cell;
   - comparing (14) by means of said processing unit (52) said significant parameter with a pre-set threshold value;
   - reporting a malfunction (15) of the telephone cell (35) when the value of said significant parameter is higher than said pre-set threshold value.

2. Method according to claim 1, wherein said index comprises a first index that depends on said telephone cell (53) associated with said identified dropped call and said telephone cell (53) associated with said last signal connection before said dropped call.

3. Method according to claim 2, wherein said step of building (10) at least one index relating to the geographic coordinates between the telephone cell (53) associated with the identified dropped call and at least another telephone cell (53) comprises the sub-steps of:

   - measuring (16) a spatial distance between the coordinates of said telephone cell (53) detecting said dropped call and said geographic coordinates of said at least another telephone cell (53) detecting a last signal connection between the identifier code of said user associated with the dropped call and the telephone cell itself;
   - associating (17) said spatial distance with said first index (D);
   - storing (18) said first index in said memory unit (50).

4. Method according to any of the preceding claims, wherein said index comprises a second index that depends on said geographic coordinates of said telephone cells (53) associated with said signal connections relating to the identifier code of said user of said dropped call in said first time interval.

**5.** Method according to claim 4, wherein said step of building (10) at least one index relating to the geographic coordinates between said telephone cell associated with said dropped call and at least another telephone cell comprises the sub-steps of:

- measuring a barycentre (19) of said geographic coordinates of said telephone cells (53) associated with said signal connections relating to the identifier code of said user of said dropped call in said first time interval;
- measuring a spatial dimension (20) as the distance between said barycentre and said geographic coordinates of said telephone cells associated with said signal connections relating to the identifier code of said user of the dropped call in said first time interval, wherein said spatial dimension is a radius of a circumference centred in said barycentre;
- associating (21) said spatial dimension to said second index;
- storing (22) said second index in said memory unit (50).

**6.** Method according to any of the preceding claims, comprising a step of identifying (23) for each telephone cell which ones among said call endings are successful call endings.

**7.** Method according to any one of the preceding claims, wherein said step of providing at least a sample mean (12) comprises the sub-steps of:

- associating (24) by means of said processing unit (52) to each identified successful call ending said second set of data for each signal connection between said identifier code of said user of the successful call ending and said telephone cell (53) that took place in a second time interval which extends between a first instant of time preceding the time instant of the successful call ending and a second instant of time subsequent to the instant of the successful call ending;
- building (25) for each telephone cell (53) by means of said processing unit (52) for each successful call ending identified in said telephone cell at least one sample index relating to the geographic coordinates of the telephone cell associated with said successful call ending and of said at least another telephone cell;
- calculating (26) for each telephone cell (53) by means of said processing unit (52) a sample mean of said built sample indexes.

**8.** Method according to any of the preceding claims, wherein said sample index comprises a first sample index which depends on said telephone cell (53) associated with said successful call ending and said telephone cell (53) associated with the last signal connection prior to said successful call ending.

**9.** Method according to any one of the preceding claims, wherein said sample index comprises a second sample index that depends on said geographic coordinates of said telephone cells (53) associated with said signal connections relating to the identifier code of said user of the successful call ending in said second time interval ().

**10.** Method according to any of the preceding claims, comprising a step of selecting said telephone cell for the identification of the malfunction (27), said selecting step (27) comprising the sub-steps of:

- counting (28) said dropped calls for each telephone cell;
- comparing (29) said dropped calls counted for each telephone cell with a minimum number of dropped calls;
- selecting (30) said telephone cell if the number of said dropped calls is greater than the minimum number of dropped calls.

**11.** Method according to claim 10, wherein said step of selecting the telephone cell (27) for identifying the malfunction comprises the sub-steps of

- counting (31) said successful call endings for each telephone cell;
- comparing (32) said successful call endings counted for each telephone cell with a minimum number of successful call endings;
- selecting (33) the telephone cell if the number of successful call endings is greater than the minimum number of successful call endings.

**12.** Method according to any one of the preceding claims wherein:

- said first set of data comprises a duration time of the call;

- said step of identifying (8) by means of said processing unit (52) which ones among said call endings detected by each telephone cell (52) are dropped calls comprises the sub-step of considering (34) only the call endings associated with a value of said duration time of the call that is lower than a threshold value of maximum duration time of the call.

**Patentansprüche**

1.  Verfahren zum Identifizieren von Fehlfunktionen bei der Verwaltung von Anrufen in einer Telefonzelle, umfassend die Schritte zum:

    - Bereitstellen (1) mindestens einer Speichereinheit (50), die zum Empfangen und Aufzeichnen von Daten konfiguriert ist;
    - Bereitstellen (2) mindestens einer Verarbeitungseinheit (52) in Signalkommunikation mit der Speichereinheit (50) und die konfiguriert ist, um Daten in der Speichereinheit (50) zu verarbeiten und aufzuzeichnen;
    - Bereitstellen (3) einer Vielzahl von Telefonzellen (53) in Signalkommunikation mit der Datenverarbeitungseinheit (52) und mit der Speichereinheit (50),
    - Detektieren (4) mittels einer jeden Telefonzelle (53) von Anrufbeendigungen, die in der Telefonzelle (53) stattgefunden haben, und von Signalverbindungen zwischen einem Benutzer und der Telefonzelle (53);
    - Erfassen eines ersten Datensatzes (5), der sich auf jede von jeder Telefonzelle (53) detektierte Anrufbeendigung bezieht, wobei der erste Datensatz mindestens einen Kennungscode des Benutzers der Anrufbeendigung und einen Zeitpunkt der Anrufbeendigung und geografische Koordinaten der Zelle (53), in der die Anrufbeendigung detektiert wird, umfasst;
    - Erfassen eines zweiten Datensatzes (6), der sich auf jede von jeder Telefonzelle (53) detektierte Signalverbindung bezieht;
    - Speichern (7) in der Speichereinheit (50) von jeder detektierten Anrufbeendigung und von jeder detektierten Signalverbindung und von jedem erfassten ersten Datensatzes und von jedem erfassten zweiten Datensatzes;
    - Identifizieren (8) mittels der Verarbeitungseinheit (52), welche unter den von jeder Telefonzelle (53) detektierten Anrufbeendigungen abgebrochene Anrufe sind;
    - Zuordnen (9), mittels der Verarbeitungseinheit (52) zu jedem identifizierten abgebrochenen Anruf, des zweiten Datensatzes für jede Signalverbindung zwischen dem Kennungscode des dem identifizierten abgebrochenen Anruf zugeordneten Benutzers und der Telefonzelle (53), die in einem ersten Zeitintervall zwischen einem ersten Zeitpunkt vor dem Zeitpunkt des abgebrochenen Anrufs und einem zweiten Zeitpunkt nach dem Zeitpunkt des abgebrochenen Anrufs stattfand;
    - Bilden (10) mittels der Verarbeitungseinheit (52) für jeden in jeder Telefonzelle (53) identifizierten abgebrochenen Anruf mindestens von einem Index bezüglich der geografischen Koordinaten der dem abgebrochenen Anruf zugeordneten Telefonzelle und der mindestens anderen Telefonzelle (53), die der letzten Signalverbindung vor dem abgebrochenen Anruf zugeordnet ist;
    - Berechnen (11) für jede Telefonzelle (53) mittels der Verarbeitungseinheit (52) eines effektiven Mittelwerts der gebildeten Indizes;
    - Bereitstellen (12) an die Verarbeitungseinheit (52) für jede Telefonzelle (53) mindestens eines Mustermittelwerts bezüglich der geographischen Koordinaten zwischen der Telefonzelle, die einem abgebrochenen Anruf zugeordnet ist, und mindestens einer anderen Telefonzelle (53), die der letzten Signalverbindung vor dem abgebrochenen Anruf zugeordnet ist;
    - Verarbeiten (13) des effektiven Mittelwerts und des Mustermittelwerts mittels der Verarbeitungseinheit (52) zum Berechnen eines signifikanten Parameters für jede Telefonzelle;
    - Vergleichen (14) des signifikanten Parameters mittels der Verarbeitungseinheit (52) mit einem voreingestellten Schwellenwert;
    - Melden einer Fehlfunktion (15) der Telefonzelle (35), wenn der Wert des signifikanten Parameters höher als der voreingestellte Schwellenwert ist.

2.  Verfahren nach Anspruch 1, wobei der Index einen ersten Index umfasst, der von der Telefonzelle (53), die mit dem identifizierten abgebrochenen Anruf zugeordnet ist, und von der Telefonzelle (53), die der letzten Signalverbindung vor dem abgebrochenen Anruf zugeordnet ist, abhängt.

3.  Verfahren nach Anspruch 2, wobei der Schritt zum Bilden (10) mindestens eines Indexes bezüglich der geografischen Koordinaten zwischen der dem identifizierten abgebrochenen Anruf zugeordneten Telefonzelle (53) und mindestens einer anderen Telefonzelle (53) die Unterschritte umfasst zum:

- Messen (16) eines räumlichen Abstands zwischen den Koordinaten der Telefonzelle (53), die den abgebrochenen Anruf detektiert, und den geografischen Koordinaten der mindestens anderen Telefonzelle (53), die eine letzte Signalverbindung zwischen dem Kennungscode des dem abgebrochenen Anruf zugeordneten Benutzers und der Telefonzelle selbst detektiert;
- Zuordnen (17) des räumlichen Abstands zu dem ersten Index (D);
- Speichern (18) des ersten Index in der Speichereinheit (50).

4. Verfahren nach einem der vorhergehenden Ansprüche, wobei der Index einen zweiten Index umfasst, der von den geografischen Koordinaten der Telefonzellen (53), die den Signalverbindungen in Bezug auf den Kennungscode des Benutzers des unterbrochenen Anrufs im ersten Zeitintervall zugeordnet sind, abhängt.

5. Verfahren nach Anspruch 4, wobei der Schritt zum Bilden (10) mindestens eines Indexes bezüglich der geografischen Koordinaten zwischen der dem unterbrochenen Anruf zugeordneten Telefonzelle und mindestens einer anderen Telefonzelle die Unterschritte umfasst:

- Messen eines Schwerpunkts (19) der geographischen Koordinaten der Telefonzellen (53), die den Signalverbindungen in Bezug auf den Kennungscode des Benutzers des abgebrochenen Anrufs im ersten Zeitintervall zugeordnet sind;
- Messen einer räumlichen Abmessung (20) als der Abstand zwischen dem Schwerpunkt und den geografischen Koordinaten der Telefonzellen, die den Signalverbindungen in Bezug auf den Kennungscode des Benutzers des abgebrochenen Anrufs im ersten Zeitintervall zugeordnet sind, wobei die räumliche Abmessung ein Radius eines Umfangs ist, der in dem Schwerpunkt zentriert ist;
- Zuordnen (21) der räumlichen Dimension zu dem zweiten Index;
- Speichern (22) des zweiten Index in der Speichereinheit (50).

6. Verfahren nach einem der vorhergehenden Ansprüche, umfassend einen Schritt zum Identifizieren (23) für jede Telefonzelle, welche unter den Anrufbeendigungen erfolgreiche Anrufbeendigungen sind.

7. Verfahren nach einem der vorhergehenden Ansprüche, wobei der Schritt zum Bereitstellen mindestens eines Mustermittelwerts (12) die Unterschritte umfasst:

- Zuordnen (24), mittels der Verarbeitungseinheit (52) zu jeder identifizierten erfolgreichen Anrufbeendigung, des zweiten Datensatzes für jede Signalverbindung zwischen dem Kennungscode des Benutzers der erfolgreichen Anrufbeendigung und der Telefonzelle (53), die in einem zweiten Zeitintervall stattgefunden hat, die sich zwischen einem ersten Zeitpunkt vor dem Zeitpunkt der erfolgreichen Anrufbeendigung und einem zweiten Zeitpunkt nach dem Zeitpunkt der erfolgreichen Anrufbeendigung erstreckt;
- Bilden (25) für jede Telefonzelle (53) mittels der Verarbeitungseinheit (52) für jede erfolgreiche Anrufbeendigung, die in der Telefonzelle identifiziert wurde, mindestens eines Musterindex, der sich auf die geografischen Koordinaten der Telefonzelle, die der erfolgreichen Anrufbeendigung zugeordnet ist und der mindestens anderen Telefonzelle bezieht;
- Berechnen (26) für jede Telefonzelle (53) mittels der Verarbeitungseinheit (52) eines Mustermittelwerts der gebildeten Musterindizes.

8. Verfahren nach einem der vorhergehenden Ansprüche, wobei der Musterindex einen ersten Musterindex umfasst, der von der der erfolgreichen Anrufbeendigung zugeordneten Telefonzelle (53) und der der letzten Signalverbindung vor dem erfolgreichen Anrufbeendigung zugeordneten Telefonzelle (53) abhängt.

9. Verfahren nach einem der vorhergehenden Ansprüche, wobei der Musterindex einen zweiten Musterindex umfasst, der von den geografischen Koordinaten der Telefonzellen (53) abhängt, die den Signalverbindungen in Bezug auf den Kennungscode des Benutzers der erfolgreichen Anrufbeendigung im zweiten Zeitintervall () zugeordnet sind.

10. Verfahren nach einem der vorhergehenden Ansprüche, umfassend einen Schritt zum Auswählen der Telefonzelle zur Identifizierung der Fehlfunktion (27), wobei der Auswahlschritt (27) die Unterschritte umfasst:

- Zählen (28) der abgebrochenen Anrufe für jede Telefonzelle;
- Vergleichen (29) der für jede Telefonzelle gezählten abgebrochenen Anrufe mit einer minimalen Anzahl von abgebrochenen Anrufen;
- Auswählen (30) der Telefonzelle, wenn die Anzahl der abgebrochenen Anrufe größer ist als die Mindestanzahl der abgebrochenen Anrufe.

11. Verfahren nach Anspruch 10, wobei der Schritt zum Auswählen der Telefonzelle (27) zur Identifizierung der Fehlfunktion die Unterschritte umfasst zum

- Zählen (31) der erfolgreichen Anrufbeendigungen für jede Telefonzelle;
- Vergleichen (32) der für jede Telefonzelle gezählten erfolgreichen Anrufbeendigungen mit einer minimalen Anzahl von erfolgreichen Anrufbeendigungen;
- Auswählen (33) der Telefonzelle, wenn die Anzahl von erfolgreichen Anrufbeendigungen größer ist als die Mindestanzahl von erfolgreichen Anrufb eendigungen.

12. Verfahren nach einem der vorhergehenden Ansprüche, wobei:

- der erste Datensatz eine Dauerzeit des Anrufs umfasst;
- der Schritt zum Identifizieren (8) mittels der Verarbeitungseinheit (52), welche unter den von jeder Telefonzelle (52) detektierten Anrufbeendigungen abgebrochene Anrufe sind, den Unterschritt zum Betrachten (34) nur der Anrufbeendigungen umfasst, die mit einem Wert der Dauerzeit des Anrufs zugeordnet sind, der niedriger ist als ein Schwellenwert der maximalen Dauerzeit des Anrufs.

**Revendications**

1. Procédé pour identifier des dysfonctionnements dans la gestion d'appels dans une cellule téléphonique comprenant les étapes consistant à :

- fournir (1) au moins une unité de mémoire (50) configurée pour recevoir et enregistrer des données ;
- fournir (2) au moins une unité de traitement (52) dans une communication de signal avec l'unité de mémoire (50) et configurée pour traiter et enregistrer des données dans l'unité de mémoire (50) ;
- fournir (3) une pluralité de cellules téléphoniques (53) dans une communication de signal avec l'unité de traitement de données (52) et avec l'unité de mémoire (50),
- détecter (4) au moyen de chaque cellule téléphonique (53) des fins d'appels qui ont lieu dans ladite cellule téléphonique (53) et des connexions de signal entre un utilisateur et ladite cellule téléphonique (53) ;
- acquérir un premier ensemble de données (5) relatif à chaque fin d'appel détectée par chaque cellule téléphonique (53), ledit premier ensemble de données comprenant au moins un code d'identification dudit utilisateur de ladite fin d'appel et un instant temporel de ladite fin d'appel et des coordonnées géographiques de ladite cellule (53) dans laquelle ladite fin d'appel est détectée ;
- acquérir un second ensemble de données (6) relatif à chaque connexion de signal détectée par chaque cellule téléphonique (53) ;
- stocker (7) dans ladite unité de mémoire (50) chaque fin d'appel détectée et chaque connexion de signal détectée et chaque premier ensemble de données acquis et chaque second ensemble de données acquis ;
- identifier (8) au moyen de ladite unité de traitement (52) celles parmi lesdites fins d'appel détectées par chaque cellule téléphonique (53) sont des appels interrompus ;
- associer (9) au moyen de ladite unité de traitement (52) pour chaque appel interrompu identifié ledit second ensemble de données pour chaque connexion de signal entre ledit code d'identification dudit utilisateur associé à l'appel interrompu identifié et ladite cellule téléphonique (53) qui a lieu dans un premier intervalle temporel entre un premier instant temporel avant ledit instant temporel dudit appel interrompu et un second instant temporel ultérieur audit instant temporel dudit appel interrompu ;
- construire (10) au moyen de ladite unité de traitement (52) pour chaque appel interrompu identifié dans chaque cellule téléphonique (53) au moins un index relatif à des coordonnées géographiques de ladite cellule téléphonique associée audit appel interrompu et de l'au moins une autre cellule téléphonique (53) associée à ladite connexion de signal avant ledit appel interrompu ;
- calculer (11) pour chaque cellule téléphonique (53) au moyen de ladite unité de traitement (52) un moyen efficace desdits index construits ;
- fournir (12) à ladite unité de traitement (52) pour chaque cellule téléphonique (53) au moins un moyen d'échantillon relatif auxdites coordonnées géographiques entre ladite cellule téléphonique associée à un appel interrompu et au moins une autre cellule téléphonique (53) associée à ladite dernière connexion de signal avant ledit appel interrompu ;
- traiter (13) au moyen de l'unité de traitement (52) ledit moyen efficace et ledit moyen d'échantillon pour calculer un paramètre important pour chaque cellule téléphonique ;
- comparer (14) au moyen de ladite unité de traitement (52) ledit paramètre important avec une valeur seuil préétablie ;
- signaler un dysfonctionnement (15) de la cellule téléphonique (35) lorsque la valeur dudit paramètre important est supérieure à ladite valeur seuil préétablie.

**2.** Procédé selon la revendication 1 où ledit index comprend un premier index qui dépend de ladite cellule téléphonique (53) associée audit appel interrompu identifié et ladite cellule téléphonique (53) associée à ladite dernière connexion de signal avant ledit appel interrompu.

**3.** Procédé selon la revendication 2, où ladite étape de construction (10) d'au moins un index relatif aux coordonnées géographiques entre la cellule téléphonique (53) associée audit appel interrompu identifié et au moins une autre cellule téléphonique (53) comprend les sous-étapes consistant à :

- mesurer (16) une distance spatiale entre les coordonnées de ladite cellule téléphonique (53) détectant ledit appel interrompu et lesdites coordonnées géographiques de ladite au moins une autre cellule téléphonique (53) détectant une dernière connexion de signal entre le code d'identification dudit utilisateur associé à l'appel interrompu et la cellule téléphonique elle-même ;
- associer (17) ladite distance spatiale audit premier index (D) ;
- stocker (18) ledit premier index dans ladite unité de mémoire (50).

**4.** Procédé selon l'une quelconque des revendications précédentes, où ledit index comprend un second index qui dépend desdites coordonnées géographiques desdites cellules téléphoniques (53) associées auxdites connexions de signal relatives au code d'identification dudit utilisateur dudit appel interrompu dans ledit premier intervalle temporel.

**5.** Procédé selon la revendication 4, où ladite étape de construction (10) d'au moins un index relatif aux coordonnées géographiques entre ladite cellule téléphonique associée audit appel interrompu et au moins une autre cellule téléphonique comprend les sous-étapes consistant à :

- mesurer un barycentre (19) desdites coordonnées géographiques desdites cellules téléphoniques (53) associées auxdites connexions de signal relatives au code d'identification dudit utilisateur dudit appel interrompu dans ledit premier intervalle temporel ;
- mesurer une dimension spatiale (20) comme la distance entre ledit barycentre et lesdites coordonnées géographiques desdites cellules téléphoniques associées auxdites connexions de signal relatives au code d'identification dudit utilisateur de l'appel interrompu dans ledit premier intervalle temporel, où ladite dimension spatiale est un rayon d'une circonférence centrée dans ledit barycentre ;
- associer (21) ladite dimension spatiale audit second index ;
- stocker (22) ledit second index dans ladite unité de mémoire (50).

**6.** Procédé selon l'une quelconque des revendications précédentes, comprenant une étape d'identification (23) pour chaque cellule téléphonique de celles parmi lesdites fins d'appel sont des fins d'appel réussies.

**7.** Procédé selon l'une quelconque des revendications précédentes, où ladite étape de fourniture d'au moins un moyen d'échantillon (12) comprend les sous-étapes consistant à :

- associer (24) au moyen de ladite unité de traitement (52) pour chaque fin d'appel réussie identifiée ledit second ensemble de données pour chaque connexion de signal entre ledit code d'identification dudit utilisateur de la fin d'appel réussie et ladite cellule téléphonique (53) qui a lieu dans un second intervalle temporel qui s'étend entre un premier instant temporel précédent l'instant temporel de la fin d'appel réussie et un second instant temporel ultérieur à l'instant de la fin d'appel réussie ;
- construire (25) pour chaque cellule téléphonique (53) au moyen de ladite unité de traitement (52) pour chaque fin d'appel réussie identifiée dans ladite cellule téléphonique au moins un index d'échantillon relatif aux coordonnées géographiques de la cellule téléphonique associée à ladite fin d'appel réussie et de ladite au moins une autre cellule téléphonique ;
- calculer (26) pour chaque cellule téléphonique (53) au moyen de ladite unité de traitement (52) un moyen d'échantillon desdits index d'échantillon construits.

8. Procédé selon l'une quelconque des revendications précédentes, où ledit index d'échantillon comprend un premier index d'échantillon qui dépend de ladite cellule téléphonique (53) associée à ladite fin d'appel réussie et ladite cellule téléphonique (53) associée à la dernière connexion de signal avant ladite fin d'appel réussie.

9. Procédé selon l'une quelconque des revendications précédentes, où ledit index d'échantillon comprend un second index d'échantillon qui dépend desdites coordonnées géographiques desdites cellules téléphoniques (53) associées auxdites connexions de signal relatives au code d'identification dudit utilisateur de la fin d'appel réussie dans ledit second intervalle temporel ().

10. Procédé selon l'une quelconque des revendications précédentes, comprenant une étape de sélection de ladite cellule téléphonique pour l'identification du dysfonctionnement (27), ladite étape de sélection (27) comprenant les sous-étapes consistant à :

   - compter (28) lesdits appels interrompus pour chaque cellule téléphonique ;
   - comparer (29) lesdits appels interrompus comptés pour chaque cellule téléphonique avec un nombre minimum d'appels interrompus ;
   - sélectionner (30) ladite cellule téléphonique si le nombre desdits appels interrompus est supérieur au nombre minimum d'appels interrompus.

11. Procédé selon la revendication 10, où ladite étape de sélection de la cellule téléphonique (27) pour identifier le dysfonctionnement comprend les sous-étapes consistant à

   - compter (31) lesdites fins d'appel réussies pour chaque cellule téléphonique ;
   - comparer (32) lesdites fins d'appel réussies comptées pour chaque cellule téléphonique avec un nombre minimum de fins d'appel réussies ;
   - sélectionner (33) la cellule téléphonique si le nombre desdites fins d'appel réussies est supérieur au nombre minium des fins d'appel réussies.

12. Procédé selon l'une quelconque des revendications précédentes où :

   - ledit premier ensemble de données comprend une durée de l'appel ;
   - ladite étape d'identification (8) au moyen de ladite unité de traitement (52) de celles parmi lesdites fins d'appel détectées par chaque cellule téléphonique (52) sont des appels interrompus comprend la sous-étape de considération (34) seulement des fins d'appel associées à une valeur de ladite durée de l'appel qui est inférieure à une valeur seuil de durée maximale de l'appel.

Fig. 1

Fig. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2017318555 A1

- US 10039013 B2